# EUROPEAN PATENT APPLICATION

(11) **EP 0 967 071 A1**
(43) Date of publication of application: **29.12.1999**
(21) Application number: 99500105.4
(22) Date of filing: 22.06.1999
(51) Int. Cl.: B32B 5/08, F41H 5/04

(54) **Multilaminar structure for conforming flexible components highly resistant to impacts and dynamic strain**

(30) Priority: 23.06.1998 AR 1003016
(71) Applicant: Lujan, Dardo Bonaparte, Mar del Plata - Buenos Aires (AR)
(72) Inventor: Lujan, Dardo Bonaparte, Mar del Plata - Buenos Aires (AR)
(74) Representative: Isern Jara, Jaime

(57) **Abstract**

A special structure (1) of the type formed by a plurality of sheets (2,3,4,5,6,7,8,9) weaved with threads of natural or artificial fibers, the threads (11,12,13,14,15) are arranged one on top of the other, joined by adhesives or stitching. The novelty is that each sheet is arranged offset at an angle (biased) from adjacent sheets by means of a turn in the same vertical axis. Thus, the web weaves of each sheet (biased) are arranged in different directions, increasing the resistance to impacts and dynamic strains, with less weight, less number of sheets and higher flexibility and resistance to breakage.

## Description

The main object of present patent of invention is a **MULTILAMINAR STRUCTURE FOR CONFORMING FLEXIBLE COMPONENTS HIGHLY RESISTANT TO IMPACTS AND DYNAMIC STRAIN** which may be applied for several purposes , such as conforming an armoring internal liner for special vehicles such as police vehicles or vehicles for the transportation of securities; an internal liner for airplane walls, or otherwise, constituting part of the cover of various objects that may be subjected to impacts which may cause deformation but not breakages, e.g. bullet-proof vests used by security personnel, and many other purposes which are not expressly mentioned herein for not being the main object of present invention.

Specifically, the present invention covers a special multilaminar structure, formed from multifilament thread webs created with highly resistant artificial or natural fibers, such as aramides, polyester, dyneema, nylon, carbon, titanium, or equivalents thereof; all of them widely and individually known at present. The novelty covered by present patent of invention is the special biasing manner with which the multiplicity of layers are superposed to each other to constitute each flexible structure.

### PREVIOUS ART

Sheets formed by spinning artificial or natural fibres such as the ones mentioned above and which superpose to each other conforming structures that are blocks of bonded sheets, preferably with adhesive layers sandwiched therebetween, are well known. In this respect, it may be mentioned a sheet identified by the brand "TWARON", "KEBLAR" and "DYNEEMA", which is specially designed to make bullet-proof vests and various industrial use apparel.

They are fabrics formed by the multifilament thread web, consisting of natural or artificial fibers, which once superposed as stated above, render fabrics highly resistant to impacts such as bullet impacts, and they are flexible and light enough so as to allow the formation, among other industrial uses, of vests and other bullet-proof garments or sharp element-proof garments.

Invariably, they are quadrangular weave webs, while both the weave and the warp are defined by natural or artificial fiber threads, and it has been verified that their effectiveness lies on the fact that the above mentioned bullet impacts fail to strike through the overall fabric given the resistance of said threads; and it may be appreciated that bullets remain inserted within the fabric body causing its deformation, and considerable trauma.

It should be specially noted that the above results are obtained by the use of a plurality of sheets that may be loose or stitched and/or gummed to each other from a minimum amount of sheets depending on the type and degree of impact to which they will be subjected.

In all these known cases, specially the garments designed for bullet-proof protection, (e.g. vests, helmets, shields and armors), the key lies on the amount of microfilaments in each thread, which thread must prove to be highly resistant to tension, elongation and breakage.

Such web is also important to achieve the desired effects in a bullet-proof vest. The cloth must be both highly resistant and flexible.

Upon studying and verifying the behaviour of the bullet-proof vests and garments thus made, it has been demonstrated that the majority of the impacts managed to strike through a considerable number of the superposition sheets constituting the fabric, however, breakage of threads is not observed in all the sheets, but rather the deformation of the web weave forming the fabric, offsetting most of the strands without getting them cut.

Obviously, the effect mentioned above is very clear in the first half of the garment's body thickness where the bullet is not allowed either to advance forward or to go out through the second half of the garment's body thickness.

Based on the above, the fabric referred to in the present patent of invention is obtained.

### NOVELTY AND MAIN OBJECT

Actually, it has been verified through our own tests that most of the threads in a considerable number of sheets striken through by the bullet were not cut but rather suffered a sidewards offset, i.e. the weave experimented deformation but the bullet failed to penetrate the whole of the sheets of the spun fibers, therefore there was an important deformation due to the impact.

It was very easy to check this behaviour since all the superposed laminates forming the fabric body had their quadrangular weave oriented in the same direction. Except for small relative offsets between each sheet, it was verified that the grid defining each sheet invariably had the same format, with the same orientation as that of adjacent grids.

The novelty highlighted by the structure referred to in the present patent of invention is that each sheet weave is offset in respect of adjacent ones, thus creating a special biasing arrangement of the sheets conforming the structure of the invention.

The above mentioned biased structure is obtained through an angular offset of the vertical axis of each sheet in respect of adjacent sheets.

Based on the construction mentioned above, the result obtained is that there is a considerable increase in structure resistance to impacts or dynamic strains, since the angular offset of the sheets oppose higher mechanical resistance to each impact.

Actually, in this case, in order for the bullet or any equivalent dynamic force to move forward on the fabric body, it will have to cut the threads since, such as was stated above, the arrangement thereof hinders any possibility of being offset and/or deformed, considerably preventing the bullet from penetrating ; therefore, there is less deformation and the trauma caused by the impact is reduced.

Consequently, it has been verified that with a 30- 50% decrease in the number of sheets required compared with superposed sheets having their quadrangular weave oriented in the same direction, equal results were obtained if the sheets were arranged in the manner described as novel in previous paragraph.

Therefore a series of advantages become evident and optimize the use of the fabric of the present invention in respect of other fabrics already known and made public. With a lower weight, a lower number of sheets and a higher flexibility, better results are obtained.

### DESCRIPTION OF ONE EMBODIMENT OF THE INVENTION

In order to show the advantages briefly commented in the present description, to which many others may be added by the experts in the art, and to facilitate the understanding of the construction, constitution and functional characteristics of the fabric herein invented, a preferred example of an embodiment is described below, example which is schematically illustrated, not to a determined scale, on the enclosed page. It is expressly made clear that precisely since it is an example, the same is not intended to be limitative or exclusive of the scope of the present invention, but rather explanatory and illustrative of the basic idea on which present invention is based.

Figure 1 is a perspective view showing a stretch of the multilaminar flexible structure constituted pursuant to the present invention.

Figure 2 is a top plan view representing the arrangement of superposed biased sheets according to a construction condition set forth in the present invention.

Figure 3 is a detailed scheme representing the arrangement of threads in the web, according to a top view of three superposed sheets.

It is clarified that, in every figure, equal reference numbers correspond to equivalent constituting parts or elements in the assembly, pursuant to the example selected to explain the fabric of the present invention.

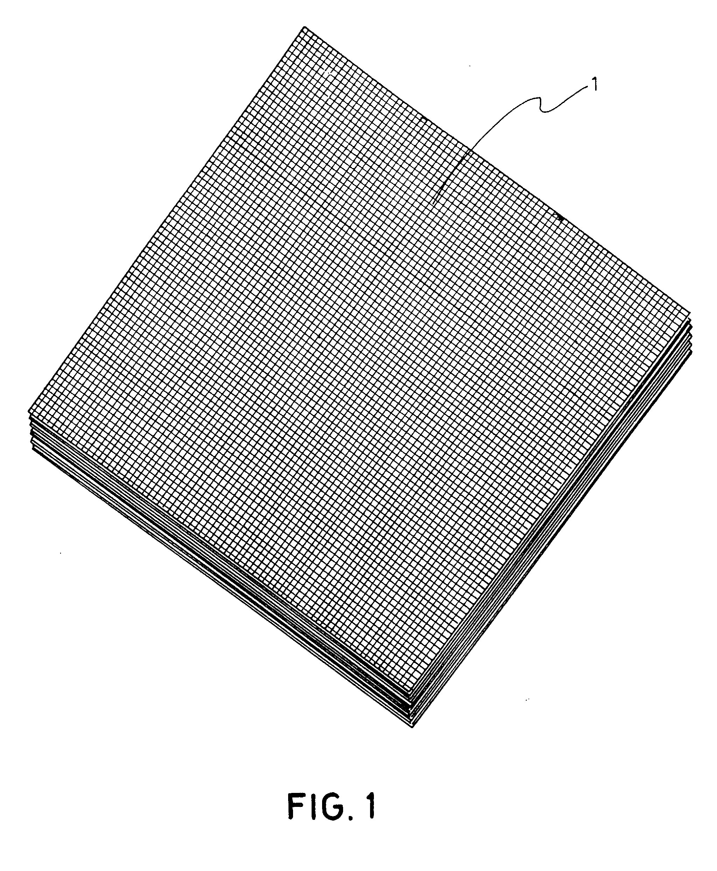

As it may be appreciated in Figure 1, the multilaminar fabric referred to in the present invention consists of a plurality of superposed sheets oriented in a particular way (biased), being its main advantage offering high resistance to impacts and dynamic strains.

Each sheet belongs to the type conformed with threads of natural or artificial highly resistant fibers such as aramides, polyester, dyneema, nylon, carbon, titanium and similar, and they form a quadrangular weave pursuant to web lines running parallel sideways of each sheet, such as shown by reference number 1 in Figure 1.

They are webs wherein the weave and warp are generally perpendicular to each other. However, there are other types of webs comprised within the scope of the present invention, e.g. webs wherein the warp is non perpendicular in respect to the weave, forming different angles.

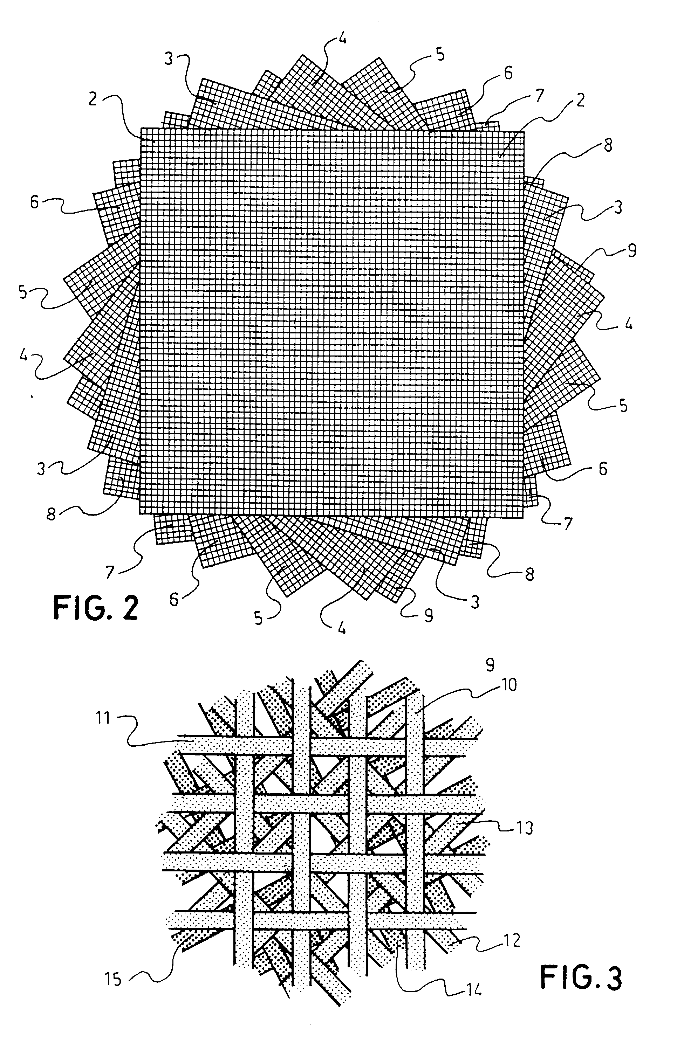

A condition of the present invention is that each of said sheets is arranged with an angular offset in respect to previous sheet (biased), which is shown with reference numbers 2 to 9 in the graphic of Figure 2.

The result of said special arrangement is that the threads of each sheet (arranged on a biased basis) are also superposed generating a body highly resistant to impacts and dynamic forces. The intention of the detail provided in Figure 3 is exemplifying said behaviour by showing the case of three superposed sheets, where threads 10 and 11 in the first sheet have different orientation than threads 12 and 13 in the second sheet, and also threads 14 and 15 in the third sheet.

As stated above, with less number of superposed sheets (biased) an effective behaviour is achieved with less weight, greater flexibility and, most of all, with lower cost since less material is required to make the same.

Based on the basic structure exemplified above, there are some construction options included within the scope claimed. Among said options it can be highlighted that all sheets are adhered one to another by means of adhesive compatible substances sandwiched therebetween.

It is also contemplated the grouping of sheets that define independent blocks superposed with others that bear the same characteristics and they are bonded by stitching lines. Said lines may be of different sizes and proportions and define square, rhomboidal, spiral and cross shapes.

These blocks formed by superposed sheets may be arranged with an angular offset regarding adjacent ones.

Preferably, the adhesive to be used is a hot melt type adhesive because besides acting as an adhesive agent between sheets or blocks, it provides higher resistance against the dynamic strains to which the fabric may be subjected. It is also contamplated that the fabric already conformed may be externally coated with this type of adhesive.

## Claims

1. A multilaminar structure for conforming flexible components highly resistant to impacts and dynamic strain, which type consists of a plurality of superposed sheets joined to each other (biased) ; each sheet is conformed by the web of multifilament threads formed with natural or artificial synthetic fibers such as aramides, polyester, dyneema, nylon, carbon, titanium and similar ones, wherein each sheet is arranged offset at an angle (biased) in respect to adjacent ones by means of a turn in the same vertical axis.

2. A multilaminar structure according to claim 1, wherein the sheets are joined to each other by means of adhesives (such as hot melt adhesives).

3. A multilaminar structure, according to claim 1, wherein the grouped sheets (biased) conform joined blocks superposed by means of adhesives.

4. A multilaminar structure according to claim 1, wherein the grouped sheets (biased) conform blocks that are joined and superposed by means of stitching lines.

5. A multilaminar structure according to claim 1, wherein the plurality of sheets (biased) are joined to each other by means of solid adhesives (such as the hot melt type adhesive).

6. A multilaminar structure according to claim 1, wherein the plurality of sheets (biased) joined to each other is covered by an extemal layer of solid hot melt type adhesive.

7. A multilaminar structure according to claim 1, wherein the plurality of sheets (biased) are glued sidewards to each other, by means of a hot melt type adhesive.

8. A multilaminar structure, according to claim 1, wherein the sheets are quadrangular weave webs.

9. A multilaminar structure according to claim 8, wherein the quadrangular weave web has its warp perpendicularly oriented in respect to the weave.

10. A multilaminar structure, according to claim 8, wherein the quadrangular weave web has its warp oriented in oblique direction in respect to the weave.
